# FASCICULE DE BREVET EUROPEEN

(11) **EP 0 419 600 B1**
(45) Date de publication et mention de la délivrance du brevet: **10.05.1995**
(21) Numéro de dépôt: 90903189.0
(22) Date de dépôt: 02.02.1990
(51) Int. Cl.: E06B 3/964, A47G 1/10, F16B 12/24, E04F 19/02, F16B 3/00, B23D 45/14, B23D 45/02, B23Q 5/00, B23D 47/12, B27G 3/00

(54) **DISPOSITIF D'ASSEMBLAGE DE CADRES ET MOULURES D'ENCADREMENT**
VORRICHTUNG ZUR MONTAGE VON RAHMEN UND RAHMENFORMEN
DEVICE FOR ASSEMBLING FRAMES AND FRAME MOULDINGS

(30) Priorité: 09.02.1989 FR 8901854; 07.06.1989 FR 8907756
(43) Date de publication de la demande: 03.04.1991
(73) Titulaire: CASSESE S.A., F-77390 Verneuil-l'Etang (FR)
(72) Inventeur: RAPAYELIAN, Christian, F-13012 Marseille (FR)
(74) Mandataire: Lhuillier, René
(86) Numéro de dépôt international: FR9000081
(87) Numéro de publication internationale: WO9009505

(56) Documents cités:
- DE-A- 1 905 315
- DE-C- 766 255
- DE-U- 8 407 494
- FR-A- 1 442 870
- FR-A- 1 457 095
- FR-A- 2 177 408
- FR-A- 2 425 010
- GB-A- 281 835
- GB-A- 334 046
- US-A- 2 735 146
- US-A- 2 784 750
- US-A- 3 298 097
- US-A- 3 425 721
- US-A- 4 219 061
- US-A- 4 493 583

## Description

La présente invention a pour objet un dispositif pour l'assemblage des cadres et moulures, telles que les moulures d'encadrement.

On connaît par le FR-A-2 425 010 une pièce d'assemblage monolithique formant un double tenon, à deux troncs de cône circulaires indentiques écartés l'un de l'autre.

Le dispositif d'assemblage selon l'invention est constitué d'une pièce monolithique ayant aussi la forme de deux troncs de cône circulaires identiques, mais ils sont d'une hauteur sensiblement égale aux trois-quarts de l'épaisseur des pièces à assembler et juxtaposées de telle manière que la distance de leurs axes parallèles soit légèrement inférieure à la longueur du plus grand diamètre, et que les grandes et petites bases, perpendiculaires aux axes, soient respectivement dans un même plan, les deux plus grandes formant un huit, et les deux plus petites étant tangentes ou très proches, de façon à ce que l'intersection des deux troncs de cône forme un triangle, ladite pièce monolithique étant destinée à être introduite à force dans deux perçages borgnes ayant chacun la forme de l'un des susdits troncs de cône et effectués à l'extrémité de chacune des deux pièces à assembler par l'appareil susmentionné, de manière à ce que, une fois ces pièces jointes, la pièce monolithique applique fermement l'une contre l'autre les surfaces à joindre.

Sur les dessins annexés, donnés à titre d'exemple non limitatif, d'une des formes de réalisation de l'objet de l'invention :

La figure 1 représente le dispositif d'assemblage vu de face.

La figure 2 est une coupe, à une échelle différente, suivant les flèches B-B de la figure 1.

La figure 3 montre la pièce d'assemblage en perspective.

Les figures 4 à 6 illustrent plusieurs exemples d'utilisation du dispositif.

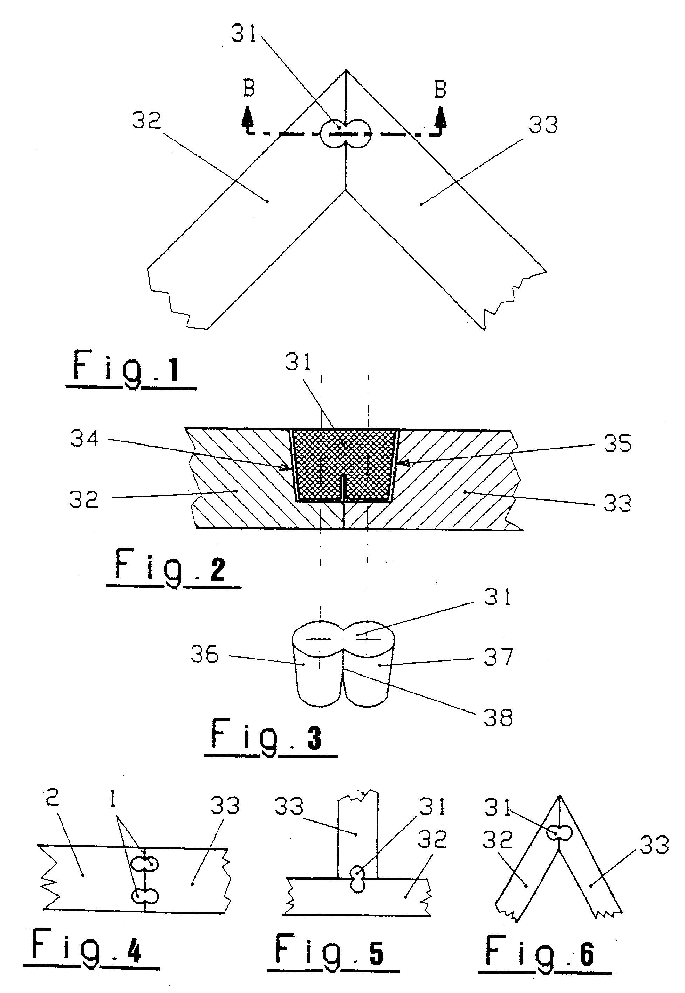

Le dispositif, figures 1 à 6, est constitué d'une pièce d'assemblage 31 s'introduisant à force dans deux perçages borgnes 34, 35 de forme correspondante effectués par un appareil dans chacune des pièces à assembler 32, 33, au bord des surfaces de jonction. La pièce d'assemblage 31 est réalisée de préférence dans une matière plastique thermoplastique semi-élastique, mais peut également être fabriquée en bois dur ou même en métal. Elle a la forme de deux troncs de cône circulaires 36, 37 à axes parallèles et à bases coplanaires perpendiculaires aux axes, accolés de telle manière que la pièce d'assemblage 31 forme un double tenon avec une intersection triangulaire 38 dont la plus grande largeur est sensiblement égale à la moitié du diamètre de la plus grande base.

Les perçages 34 et 35 destinés à recevoir la pièce d'assemblage 31 sont réalisés sur une face non visible, avant la coupe des pièces 32 et 33 à assembler, afin de pouvoir les positionner avec le maximum de précision, juste à l'extrémité bord de la surface de coupe. Il est en effet nécessaire que le bord de ces perçages détermine sur chaque surface de jonction une échancrure de forme identique à celle de l'intersection 8 de la pièce d'assemblage 31. En outre, la position des perçages est déterminée de façon à ce que la mise en place de la pièce d'assemblage 31 applique fortement les surfaces de jonction l'une contre l'autre dans le but soit de réaliser un assemblage démontable suffisamment résistant, soit de jouer le rôle de presse de serrage en cas de collage.

Le positionnement des divers éléments constitutifs donne à ce dispositf un maximum d'effets utiles qui n'avaient pas été obtenus à ce jour par des dispositifs similaires.

## Revendications

1. Dispositif d'assemblage de cadres et moulures d'encadrement constitué par une pièce monolithique (31) formant un double tenon et destinée à être introduite dans des perçages borgnes (34, 35) de forme correspondante prévus en bordure des surfaces de jonction des pièces à assembler, caractérisé par le fait que le double tenon a la forme de deux troncs de cône circulaires identiques (36, 37) d'une hauteur sensiblement égale aux trois-quarts de l'épaisseur des pièces (32, 33) à assembler, par le fait que les deux troncs de cône circulaires sont juxtaposés de telle manière que la distance de leurs axes parallèles soit légèrement inférieure à la longueur du plus grand diamètre, et que les grandes et petites bases, perpendiculaires aux axes, soient respectivement dans un même plan, les deux plus grandes formant un huit, et les deux plus petites étant tangentes ou très proches de façon à ce que l'intersection (38) des deux troncs de cône (36, 37) forme un triangle, et par le fait que les deux perçages borgnes (34, 35) ont chacun la forme de l'un des susdits troncs de cône et sont effectués à l'extrémité de chacune des deux pièces (32, 33) à assembler, de manière à déterminer sur chaque surface de jonction une échancrure de forme identique à celle de l'intersection (38) de la pièce d'assemblage (31) pour que, une fois les susdites pièces (32, 33) jointes, la pièce d'assemblage (31) puisse être introduite à force dans ces deux perçages (34, 35) et applique fermement l'une contre l'autre les surfaces à joindre en vue de réaliser un assemblage résistant mais pouvant être démonté.

2. Dispositif d'assemblage suivant la revendication 1, caractérisé par le fait que la pièce d'assemblage (31) joue le rôle de presse de serrage quand les pièces à assembler (32, 33) sont collées dans le but d'obtenir un montage permanent.

## Patentansprüche

1. Vorrichtung zur Montage von Rahmen und Rahmenformen dargestellt durch ein einstückiges, einen Doppelzapfen bildendes Teil (31) und dazu bestimmt, in Sackbohrungen (34, 35) entsprechender Form eingesteckt zu werden, die im Rand der Verbindungsflächen der zusammenzufügenden Teile vorgesehen sind, dadurch gekennzeichnet, daß der Doppelzapfen die Form zweier identischer Kreiskegelstümpfe (36, 37) mit einer Höhe von dreiviertel der Dicke der zusammenzufügenden Teile (32, 33) aufweist, daß die zwei Kreiskegelstümpfe so miteinander verbunden sind, daß der Abstand ihrer zueinander parallelen Achsen geringfügig kleiner als die Länge des größten Durchmessers ist und daß die großen und kleinen zu den Achsen senkrechten Basen jeweils in derselben Ebene liegen, wobei die beiden größten eine Acht bilden und die beiden kleinsten Tangenten oder sich sehr nahe sind so, daß die Schnittstelle (38) der beiden Kegelstümpfe (36) 37) ein Dreieck bildet, und daß die beiden Sackbohrungen (34, 35) je die Gestalt eines der beiden oben genannten Kegelstümpfe aufweisen und am Ende jedes der beiden zusammenzufügenden Teile (32, 33) so ausgeführt sind, daß sie an jeder der Verbindungsflächen einen mit der Schnittstelle (38) des Verbindungsteiles (31) identischen Ausschnitt bestimmen, damit, wenn die oben genannten Teile (32, 33) einmal zusammengefügt sind, das Verbindungsteil (31) unter Kraftaufwand in diese beiden Bohrungen (34, 35) eingesteckt werden kann und die eine der zu verbindenden Flächen dauerhaft gegen die andere drückt, um eine widerstandsfähige Verbindung zu verwirklichen, die aber auch wieder zerlegt werden kann.

2. Vorrichtung nach Anspruch 1, dadurch gekennzeichnet, daß das Verbindungsteil (31) die Rolle einer Spannpresse spielt, wenn die zusammenzufügenden Teile (32, 33) zum Erhalt einer dauerhaften Montage geleimt sind.

## Claims

1. A device for assembling frames and mouldings for framing, the device consisting of a monolithic component (31) forming a double tenon and intended to be inserted into blind drillings (34, 35) of corresponding shape which are provided at the edge of the joining surfaces of the components to be assembled, characterized in that the double tenon has the shape of two identical circular cone frustums (36, 37) of a height substantially equal to three-quarters of the thickness of the components (32, 33) to be assembled, in that the two circular cone frustums are juxtaposed so that the distance between their parallel axes is slightly less than the length of the larger diameter, and so that the large and small bases which are perpendicular to the axes are respectively in one and the same plane, the larger two forming an eight and the smaller two being tangential or very close so that the intersection (38) of the two cone frustums (36, 37) forms a triangle, and in that the two blind drillings (34, 35) each have the shape of one of the abovementioned cone frustums and are made at the end of each of the two components (32, 33) to be assembled, so as to determine, on each joining surface, an opening of shape identical to that of the intersection (38) of the assembly component (31) so that once the abovementioned components (32, 33) have been joined together, the assembly piece (31) can be forcibly inserted into these two drillings (34, 35) and can apply the surfaces to be joined firmly against each other with a view to achieving an assembly which is sturdy but can be dismantled.

2. An assembly device according to claim 1, characterized in that the assembly piece (31) acts as a clamping press when the components (32, 33) to be assembled are bonded together with the objective of obtaining a permanent joint.
